# EUROPEAN PATENT SPECIFICATION

(11) **EP 0 394 388 B1**
(45) Date of publication and mention of the grant of the patent: **05.01.1994**
(21) Application number: 89909767.9
(22) Date of filing: 05.09.1989
(51) Int. Cl.: B22F 3/02, B22F 7/00

(54) **METHOD FOR THE MANUFACTURE OF RIVET FOR A FIXED SPIKE OR FOR A SLEEVE-MOUNTED SPIKE, RESPECTIVELY, AND EQUIPMENT FOR CARRYING OUT THE METHOD**
VERFAHREN ZUR HERSTELLUNG EINES NIETNAGELS, BEZIEHUNGSWEISE EINES UMHÜLLTEN NIETNAGELS UND VORRICHTUNG ZUR DURCHFÜHRUNG DES VERFAHRENS
PROCEDE DE FABRICATION DE RIVET RESPECTIVEMENT POUR UNE CHEVILLE FIXE OU POUR UNE CHEVILLE MONTEE SUR MANCHON, ET EQUIPEMENT DE MISE EN UVRE DU PROCEDE

(30) Priority: 07.09.1988 FI 884122
(43) Date of publication of application: 31.10.1990
(73) Proprietor: NESTE OY, FIN-02150 Espoo (FI)
(72) Inventor: SUVANTO, Erkki, SF-06400 Porvoo (FI)
(74) Representative: Tiedtke, Harro, Dipl.-Ing.
(86) International application number: PCT/FI89/00167
(87) International publication number: WO 90/02619

(56) References cited:
- DE-B- 1 282 869
- SE-B- 383 278
- US-A- 2 815 535
- Derwent's abstract, nr 8493938/15, SU 1026958, publ.week 8415

## Description

The invention concerns a method for the manufacture of a rivet for a fixed spike or for a sleeve-mounted spike, respectively, by pressing in a mould.

The invention further concerns equipment for carrying out the method for the manufacture of a rivet for a fixed spike or for a sleeve-mounted spike, respectively, said equipment comprising a mould provided with a cavity space, pressing equipment, and filling equipment.

The commonest solution in the prior-art fixed spikes and in the rivet parts of sleeve-mounted spikes, respectively, is such that the fixed spike or the rivet part of a sleeve-mounted spike, respectively, is provided with a separate hard-metal tip. Such a spike is usually manufactured in a mould consisting of several parts, so that the mould parts are provided with punches acting in the axial direction of the spike to be manufactured, the spike blank being pressed axially in opposite directions by means of said punches. It is a drawback of such methods of manufacture and equipment that they require several separate working steps and, moreover, the construction of the equipment and of the moulds is complicated. Such a method of manufacture and the means necessary therefor are described in the patent specification SE-B-383 278 (and GB 1 325 136, respectively). In the means used therein a metal powder is pressed in a mould with the aid of two counteracting plungers, wherein the one plunger is additionally divided into an inner and an outer plunger. Thereby the inner plunger is not used for pressing, but only for moulding, i.e. it is introduced as core mould into the not yet pressed metal powder and remains there until the pressing operation has been finished. A rod is inserted by the same means into the thus formed hole.

In the patent specification DE-AS 1 282 869, as well, a means for pressing workpieces made from metal powder is shown. The means consists of a mould divided in horizontal direction and two vertically acting plungers. The plungers counteract, wherein one of said plungers pressing from above downwardly interacts with the upper mould part and the other plunger pressing from below upwardly interacts with the lower mould part. The moulding at the outer periphery of the workpiece is, thus, effected by the shaping of the mould parts and the moulding of the upper and lower side of the workpieces by the respective shaping of the upper and lower plunger. This means also renders only the manufacture of a pressed piece possible into which a hard metal insert still must be inserted subsequently by a further working step.

The object of the present invention is to provide a method for the manufacture of rivet for fixed spikes or for sleeve-mounted spikes, in which the number of working steps is reduced considerably, and furthermore to provide a means with which the method according to the invention can be easily realized.

In view of achieving the object stated above, the method in accordance with the invention is mainly characterized in that the method comprises the following steps:
the cavity space in the mould, corresponding to the shape of the spike to be manufactured, is filled to the desired extent with a first material to form the body part of the spike,
a first punch, whose diameter is substantially smaller than the diameter of the cavity space in the mould, is fitted into the cavity space concentrically with the cavity space, and the annular space between said first punch and the cavity space is filled with a second material so as to form the wear-resistant surface layer for the spike,
the first punch is removed, and the space remaining after said punch is filled with a third material, and
the spike is pressed to the desired shape and density, whereinafter the spike is removed from the mould.

On the other hand, the equipment in accordance with the invention is mainly characterized in that the mould is formed as a two-part mould, so that the counter-faces of the first mould and of the second mould, to be placed one against the other, are placed in the widest portion of the cavity space in the mould in the area of the foot widenings of the cavity space and that the press equipment comprises punches, which are fitted to act towards the second mould substantially perpendicularly to the counter-faces and in the same direction. Optional features of the invention are set out in the dependent claims 2 to 13 and 15.

Compared with the prior-art solutions, by means of the invention several advantages are obtained, whereof, e.g., the following may be stated. In the method in accordance with the invention, by pressing from one direction, it is possible to manufacture the hard tip part as well as the round forms in the foot part of the spike, the latter being of essential importance for the conduct of the spike in a tyre. In the method and equipment in accordance with the invention, the wear-resistant outer face of the spike tip may be formed as of desired thickness. If necessary, said wear-resistant outer face may be composed of several different materials. Since, in the method of the invention, the spike is manufactured in the mould by pressing from one direction, the tip portion of the spike is compressed more densely than the foot part. Since the foot part of the spike remains less dense than the tip, a spike of lower weight and lower consumption of material are obtained. A remarkable advantage of the equipment is simplicity of the mould solution, by means of which, however, the foot part of the spike, placed against the rubber, can be shaped freely. Moreover, the method of manufacture in accordance with the invention can be automated very easily.

In the following, the invention will be described by way of example with reference to the figures in the accompanying drawing, the invention being, however, in no way strictly confined to the exemplifying embodiment illustrated in same.

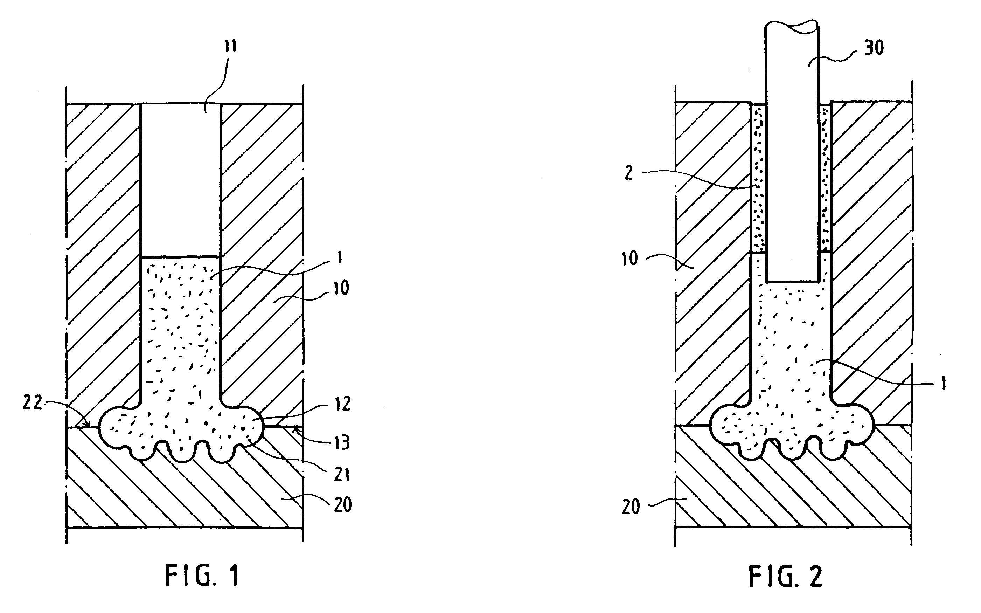

Figures 1 to 7 in the accompanying drawing are sectional views of a preferred equipment used in the method of manufacture in accordance with the invention in the different steps of the method.

The equipment for the manufacture of a spike, shown in the figures in the drawing, comprises a two-part mould, which comprises a first mould 10 and a second mould 20 to be fitted one against the other. Into the first mould 10 a through hole 11 has been formed for the body part and the tip of the spike to be manufactured. Into the hole 11 a first foot widening 12 has been formed for the foot of the spike in the area of the counter-face of the first mould 10 to be fitted against the second mould 20. In a corresponding way, into the second mould 20, a second foot widening 21 has been formed in the area of the counter-face 22 of the second mould 20. The equipment in accordance with the invention further includes a press device, which comprises a first and a second punch 30 and 40, by means of which the powdery materials of manufacture of the spike are pressed in the mould 10,20 to the shape required by the mould and to the desired density. The equipment in accordance with the invention further comprises a filling equipment for filling the mould with the materials of manufacture of the spike. Said filling equipment is, however, not shown in the figures in the drawing. The filling equipment may comprise, e.g., a suitable dosage funnel and related dosage means for filling the mould.

In Fig. 1 in the drawing, the first step of the method of the invention is shown. In the step shown in Fig. 1 the first mould 10 and the second mould 20 have been fitted one against the other by their counter-faces 13 and 22 so that the foot widenings 12 and 21 in the moulds 10,20 are placed facing each other. In the first step of the method of manufacture, shown in Fig. 1, the mould 10,20 is filled with a first material 1, of which the body part and the flange of the spike to be manufactured are composed.

Fig. 2 shows the second and the third step. In the second step of the method of manufacture, a first punch 30 is fitted into, the hole 11 provided in the first mould 10, by means of which said punch 30 the first material 1 of the spike, fitted into the mould in the first step, is pressed towards the second mould 20 so that filling of the mould is also guaranteed in the areas of the foot widenings 12 and 21. The diameter of the first punch 30 is smaller than the diameter of the hole 11, so that an annular space remains in the hole 11 around the first punch 30. In the third step of the method of manufacture, said annular space is filled with a second material 2 while the first punch 30 is in the hole 11 in the position shown in Fig. 2. Out of said second material 2, the annular wear-resistant part to be provided at the tip of the spike is formed.

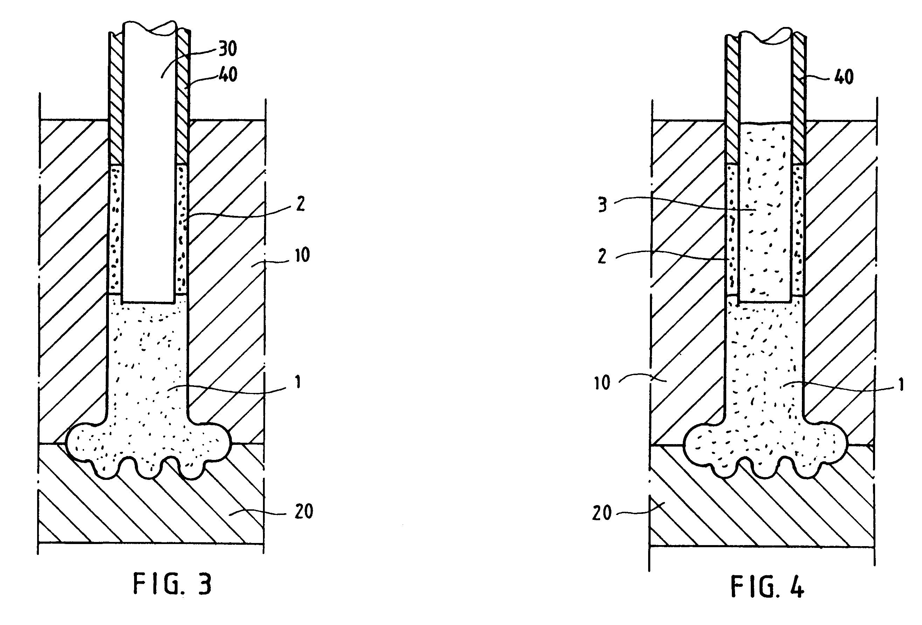

The fourth step of the method of manufacture is shown in Fig. 3. In this step of the method the second punch 40, which is placed on the first punch and is coaxial with the first punch 30, is fitted into the hole 11 provided in the first mould, said second punch moving in the same direction with the first punch 30. In the fourth step of the method of manufacture, shown in Fig. 3, an intermediate pressing of the spike blank is carried out by means of both of the punches 30,40 at the same time. On completion of said intermediate pressing the fifth step of the method of manufacture is reached, which is shown in Fig. 4. In this step the first punch 30, placed inside the second punch 40, is pulled out of the mould, and the mould is filled with a third material 3 while the second punch 40 is still in its position in the position shown in Fig. 4. Thus, by means of the third material 3, the space that remains inside the second material 2 and the second punch 40 is filled to the desired extent.

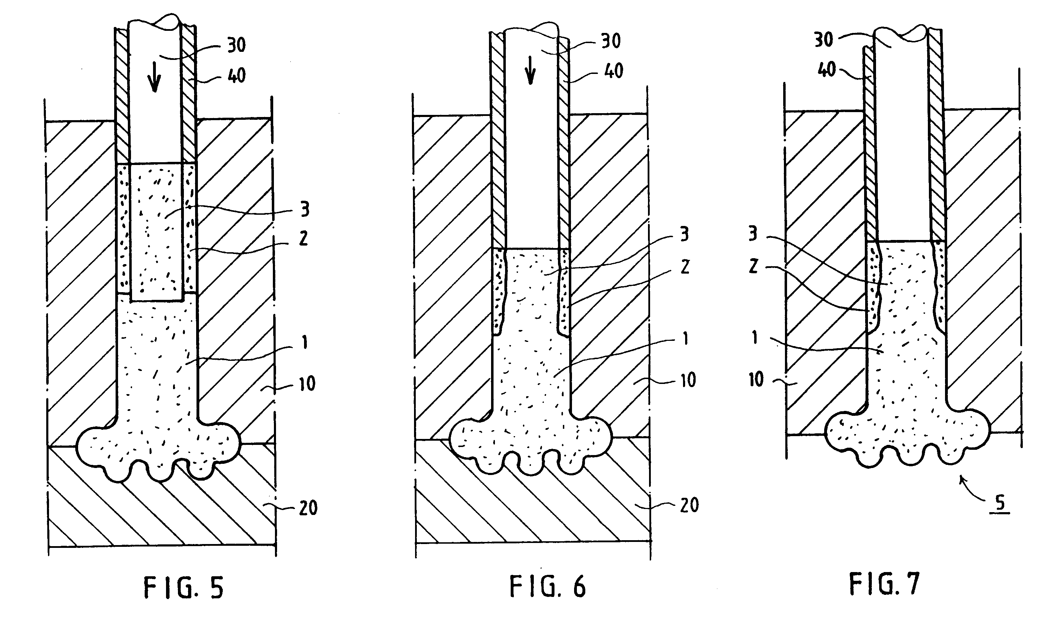

Upon completion of the filling with the third material 3 the sixth step of the method of manufacture is reached, which is shown in Figures 5 and 6 and in which the pressing of the materials 1,2,3 to the desired density is carried out. This is performed so that first the third material 3 is pressed by means of the first punch 30. Both of the punches 30,40 may reach the same level, as is shown in Fig. 5, but this is in no way necessary. Hereinafter the ultimate pressing of the spike is carried out by means of both of the punches 30,40 at the same time in the way shown in Fig. 6, whereby the spike obtains its ultimate shape and density. It may be considered an alternative embodiment for this step of the manufacture that, after the first and the second punch 30,40 have been pressed to the same level, said punches 30,40 are removed and a single bunch is fitted in their place, whose diameter corresponds to the diameter of the second punch. The ultimate pressing of the spike in accordance with Fig. 6 is then carried out by means of this single punch. After the ultimate pressing has been completed, the last step of the manufacture is reached, i.e. removal of the spike 5 out of the mould 10,20. This is carried out so that the mould is opened by pulling the second mould 20 apart from the first mould 10. Hereupon the spike 5 is removed out of the first mould 10 by pushing by means of the punches 30,40.

As regards the materials to be used in the manufacture of the spike 5, i.e. the first, second and the third material 1,2,3, the following can be stated briefly. As the first material 1, it is advantageously possible to use various ferritic, ceramic or equivalent sintering powders. Moreover, as material of the first material 1, it is also possible to use various mixtures or additives by means of which, for example, the compatibility of the spike foot with rubber or the gliding properties of the spike in the tyre rubber are improved. Such mixtures are, e.g., various aluminium and graphite mixtures or equivalent. The use of sintering powders is essential for the method in accordance with the invention, because, after the spike has been given its ultimate shape in the mould, it is sintered, i.e. subjected to a high temperature in an oven or equivalent so as to give the product its ultimate hardness and strength. As the second material 2, of which the hard wear-resistant surface layer is formed for the spike, materials are used which have sufficiently high hardness. Such materials are, e.g., various sintering powders alloyed with tungsten, tantalum or titanium carbides or equivalent. In the spike manufactured in accordance with the method, as the third material it is advantageously possible to use the same material as the first material 1. As an alternative, as the third material, it is possible to use a material or a material alloy by means of which the toughness and/or the bending strength of the spike is improved. By means of the use of such a material, e.g., the risk of break of the spike can be reduced substantially.

## Claims

1. Method for the manufacture of a rivet for a fixed spike or for a sleeve-mounted spike, respectively, by pressing in a mould, **characterized** in that the method comprises the following steps:
the cavity space (11,12,21) in the mould (10,20), corresponding to the shape of the spike to be manufactured, is filled to the desired extent with a first material (1) to form the body part of the spike,
a first punch (30), whose diameter is substantially smaller than the diameter of the cavity space (11,12,21) in the mould, is fitted into the cavity space concentrically with the cavity space, and the annular space between said first punch (30) and the cavity space is filled with a second material (2) so as to form the wear-resistant surface layer for the spike,
the first punch (30) is removed, and the space remaining after said punch is filled with a third material (3), and
the spike is pressed to the desired shape and density, whereinafter the spike is removed from the mould.

2. Method as claimed in claim 1, **characterized** in that, after the second material (2), which forms the surface layer, has been fitted into the mould (10,20), an intermediate pressing is carried out to compact at least said second material (2).

3. Method as claimed in claim 2, **characterized** in that the intermediate pressing is carried out by means of a hollow second punch (40), which is fitted concentrically on the first punch (30) while the first punch (30) is fitted in the cavity space (11,12, 21) in the mould.

4. Method as claimed in claims 2 and 3, **characterized** in that the intermediate pressing is carried out by pressing by means of the first and the second punch (30,40) at the same time.

5. Method as claimed in any of the preceding claims, **characterized** in that the filling with the third material is carried out through the axial central hole in the second punch (40).

6. Method as claimed in any of the preceding claims, **characterized** in that, after the filling with the third material (3) has been carried out, said third material (3) is pressed by means of the first punch (30) to the desired degree of compression.

7. Method as claimed in any of the preceding claims, **characterized** in that the ultimate pressing of the product is carried out by at the same time pressing by means of the first and the second punch (30,40).

8. Method as claimed in any of the claims 1 to 6, **characterized** in that for the ultimate pressing of the product the first and the second punch (30,40) are removed and the ultimate pressing is carried out by means of a single third punch.

9. Method as claimed in any of the preceding claims, **characterized** in that the removal of the product out of the mould (10,20) is carried out after opening of the mould by means of a punch/punches (30,40) by pushing in the pressing direction of the punch/punches.

10. Method as claimed in any of the preceding claims, **characterized** in that ferritic based sintering powders, ceramic sintering powders are used as the first material (1).

11. Method as claimed in claim 10, **characterized** in that the material of the first material (1) is alloyed with aluminium, graphite.

12. Method as claimed in any of the preceding claims, **characterized** in that a sintering powder alloyed with hardness-improving materials, such as with tungsten, tantalum or titanium carbides, is used as the second material (2).

13. Method as claimed in any of the preceding claims, **characterized** in that the same material as the first material is used as the third material.

14. Equipment intended for carrying out the method as claimed in any of the preceding claims for the manufacture of a rivet for a fixed spike or for a sleeve-mounted spike, respectively, said equipment comprising a mould (10, 20) provided with a cavity space (11, 12, 21), pressing equipment, and filling equipment,
**wherein** the mould is formed as a two-part mould so that the counter-faces (13, 22) of the first mould (10) and of the second mould (20), to be placed one against the other, are placed in the widest portion of the cavity space of the mould in the area of foot widenings (12, 21) of the cavity space, and
**wherein** the press equipment comprises punches (30, 40), which are fitted to act towards the second mould (20) substantially perpendicularly to the counter-faces (12, 21) and in the same direction.

15. Equipment as claimed in claim 14, **characterized** in that the punches (30,40), which constitute the press equipment, are arranged coaxially one inside the other.

## Patentansprüche

1. Verfahren zur Herstellung eines Nietnagels bzw. eines umhüllten Nietnagels durch Pressen in eine Form,
dadurch gekennzeichnet, daß das Verfahren folgende Schritte hat:
den der Gestalt des herzustellenden Nagels entsprechenden Hohlraum (11, 12, 21) in der Form (10, 20) bis zum gewünschten Maß mit einem ersten Material (1) zu füllen, um den Grundkörper des Nagels zu bilden,
einen erster Formstößel (30), dessen Durchmesser wesentlich geringer als der Durchmesser des Hohlraums (11, 12, 21) in der Form ist, in den Hohlraum konzentrisch mit dem Hohlraum einzubringen, und den ringförmigen Raum zwischen dem ersten Formstößel (30) und dem Hohlraum mit einem zweiten Material (2) zu füllen, um die verschleißfeste Oberflächenschicht für den Nagel zu bilden,
den ersten Formstößel (30) wegzubewegen, und den nach dem Formstößel verbleibenden Raum mit einem dritten Material (3) zu füllen, und
den Nagel zu einer gewünschten Gestalt und Dichte zu pressen, in welcher danach der Nagel aus der Form bewegt wird.

2. Verfahren gemäß Anspruch 1, wobei, nachdem das zweite, die Flächenschicht bildende Material (2) in die Form (10, 20) eingebracht wurde, ein Zwischenpressen ausgeführt wird, um zumindest das zweite Material (2) zu verdichten.

3. Verfahren gemäß Anspruch 2, wobei das Zwischenpressen mit Hilfe eines hohlen, zweiten Formstößels (40) ausgeführt wird, der konzentrisch auf dem ersten Formstößel (30) eingepaßt ist, während der erste Formstößel (30) in den Hohlraum (11, 12, 21) in die Form eingebracht ist.

4. Verfahren gemäß den Ansprüche 2 und 3, wobei das Zwischenpressen durch Pressen mit Hilfe des ersten und des zweiten Formstößels (30, 40) gleichzeitig ausgeführt wird.

5. Verfahren nach einem der vorhergehenden Ansprüche, wobei die Füllung mit dem dritten Material durch das axiale Mittelloch im Zweiten Formstößel (40) ausgeführt wird.

6. Verfahren nach einem der vorhergehenden Ansprüche, wobei nach der Ausführung der Füllung mit dem dritten Material (3) das dritte Material (3) mit Hilfe des ersten Formstößels (30) bis zu einem gewünschten Grad an Verdichtung verpreßt wird.

7. Verfahren nach einem der vorhergehenden Ansprüche, wobei das letzte Verpressens des Produktes durch ein gleichzeitiges Pressen mit Hilfe des ersten und des zweiten Formstößels (30, 40) ausgeführt wird.

8. Verfahren nach einem der Ansprüche 1 bis 6, wobei für das letzte Verpressen des Produktes der erste und der zweite Formstößel (30, 40) wegbewegt werden und das letzte Verpressen mit Hilfe eines einzelnen dritten Formstößels ausgeführt wird.

9. Verfahren nach einem der vorhergehenden Ansprüche, wobei das Entfernen des Produktes aus der Form (10, 20) nach einem Öffnen der Form mit Hilfe eines Formstößels/von Formstößeln (30, 40) durch Drücken des Formstößels/der Formstößel in die Preßrichtung des Formstößels/der Formstößel ausgeführt wird.

10. Verfahren nach einem der vorhergehenden Ansprüche, wobei als erstes Material (1) ferritisches Sinterpulver und keramisches Sinterpulver verwendet werden.

11. Verfahren nach Anspruch 10, wobei das Material des ersten Materials (1) mit Aluminium oder Graphit legiert ist.

12. Verfahren nach einer der vorhergehenden Ansprüche, wobei das mit härteverbessernden Materialien, wie Wolfram-, Tantal- oder Titankarbiden, legierte Sinterpulver als zweites Material (2) eingesetzt wird.

13. Verfahren nach einem der vorhergehenden Ansprüche, wobei das gleiche Material wie das erste Material als drittes Material verwendet wird.

14. Vorrichtung zur Ausführung des Verfahrens nach einem der vorhergehenden Ansprüche zur Herstellung eines Nietnagels bzw. eines umhüllten Nietnagels, indem die Vorrichtung eine Form (10, 20) mit einem Hohlraum (11, 12, 21), eine Preßvorrichtung und eine Füllvorrichtung hat,
wobei die Form als eine zweiteiligen Form so ausgeführt ist, daß die Gegenflächen (13, 22) der eine gegen die andere anzuordnenden ersten Form (10) und zweiten Form (20) im breitesten Abschnitt des Hohlraums der Form im Gebiet der Fußverbreiterungen (12, 21) des Hohlraumes angeordnet sind, und
die Preßvorrichtung Formstößel hat (30, 40), die so einrichtet sind, um zur zweiten Form (20) im wesentlichen lotrecht zu den Gegenflachen (12, 21) und in die gleiche Richtung zu wirken.

15. Vorrichtung gemäß Anspruch 14, wobei die die Preßvorrichtung bildenden Formstößel (30, 40) koaxial einer im anderen angeordnet sind.

## Revendications

1. Procédé de fabrication d'un rivet pour un clou fixe ou respectivement un clou monté sur manchon par compression dans un moule, caractérisé en ce que le procédé comprend les étapes suivantes:
l'espace de la cavité (11, 12, 21) du moule (10, 20) qui correspond à la forme du clou à fabriquer est rempli avec la quantité désirée d'un premier matériau (1) pour former la partie de corps du clou,
un premier poinçon (30) dont le diamètre est sensiblement plus petit que le diamètre de l'espace de la cavité (11, 12, 21) du moule est disposé dans l'espace de la cavité concentriquement à cet espace, et l'espace annulaire entre ledit premier poinçon (30) et l'espace de la cavité est rempli avec un second matériau (2) de manière à former la couche de surface résistante à l'usure du clou,
le premier poinçon (30) est retiré et l'espace qui subsiste après le retrait dudit poinçon est rempli avec un troisième matériau (3), et
le clou est pressé jusqu'à la forme et la densité désirées, suite à quoi le clou est retiré du moule.

2. Procédé selon la revendication 1, caractérisé en ce qu'une compression intermédiaire est réalisée pour compacter au moins ledit second matériau (2) lorsque ce second matériau (2) qui forme la couche de surface a été disposé dans le moule (10, 20).

3. Procédé selon la revendication 2, caractérisé en ce que la compression intermédiaire est réalisée au moyen d'un second poinçon creux (40) qui est disposé concentriquement sur le premier poinçon (30) alors que ce premier poinçon (30) est disposé dans l'espace de la cavité (11, 12, 21) du moule.

4. Procédé selon les revendications 2 et 3, caractérisé en ce que la compression intermédiaire est réalisée par compression au moyen des premier et second poinçons (30, 40) en même temps.

5. Procédé selon l'une quelconque des revendications précédentes, caractérisé en ce que le remplissage au moyen du troisième matériau est réalisé par le trou central axial du second poinçon (40).

6. Procédé selon l'une quelconque des revendications précédentes, caractérisé en ce que lorsque le remplissage au moyen du troisième matériau (3) a été réalisé, ledit troisième matériau (3) est comprimé au moyen du premier poinçon (30) jusqu'au degré de compression désiré.

7. Procédé selon l'une quelconque des revendications précédentes, caractérisé en ce que la compression finale du produit est réalisée par une compression simultanée au moyen des premier et second poinçons (30, 40).

8. Procédé selon l'une quelconque des revendications 1 à 6, caractérisé en ce que les premier et second poinçons (30, 40) sont retirés en vue de la compression finale du produit, et la compression finale est réalisée au moyen d'un unique troisième poinçon.

9. Procédé selon l'une quelconque des revendications précédentes, caractérisé en ce que le retrait du produit hors du moule (10, 20) est réalisé après ouverture du moule au moyen d'un poinçon ou de poinçons (30, 40) en exerçant une poussée dans la direction de la compression du ou des poinçons.

10. Procédé selon l'une quelconque des revendications précédentes, caractérisé en ce que l'on utilise en tant que premier matériau (1) des poudres de frittage ferritiques ou des poudres de frittage céramiques.

11. Procédé selon la revendication 10, caractérisé en ce que le matériau constituant le premier matériau (1) est allié à de l'aluminium ou du graphite.

12. Procédé selon l'une quelconque des revendications précédentes, caractérisé en ce que de la poudre de frittage alliée à des matériaux améliorant sa dureté, tels que des carbures de tungstène, tantale ou titane, est utilisée en tant que second matériau (2).

13. Procédé selon l'une quelconque des revendications précédentes, caractérisé en ce que l'on utilise comme troisième matériau le même matériau que le premier matériau.

14. Equipement pour la mise en oeuvre du procédé selon l'une quelconque des revendications précédentes et destiné à la fabrication d'un rivet pour un clou fixe ou un clou monté sur manchon, respectivement, ledit équipement comprenant un moule (10, 20) muni d'un espace formant une cavité (11, 12, 21), un équipement de compression et un équipement de remplissage,
dans lequel le moule est formé sous forme d'un moule en deux parties, de manière que les contre-faces (13, 22) du premier moule (10) et du second moule (20) qui doivent être placées l'une contre l'autre soient disposées dans la portion la plus large de l'espace de la cavité du moule dans la région des élargissements de pied (12, 21) de la cavité, et
en ce que l'équipement de compression comprend des poinçons (30, 40), qui sont montés de façon à agir en direction du second moule (20) sensiblement perpendiculairement aux contre-faces (12, 21), et dans la même direction.

15. Equipement selon la revendication 14, caractérisé en ce que les poinçons (30, 40) qui constituent l'équipement de compression sont montés coaxialement l'un à l'intérieur de l'autre.
